# EUROPÄISCHE PATENTSCHRIFT

(11) **EP 0 479 715 B1**
(45) Veröffentlichungstag und Bekanntmachung des Hinweises auf die Patenterteilung: **22.03.1995**
(21) Anmeldenummer: 91810621.2
(22) Anmeldetag: 08.08.1991
(51) Int. Cl.: B65H 29/00

(54) **Bandverschluss**
Closure for ribbon
Fermeture pour bande

(30) Priorität: 02.10.1990 CH 3157/90
(43) Veröffentlichungstag der Anmeldung: 08.04.1992
(73) Patentinhaber: Feramatic AG, CH-8570 Weinfelden (CH)
(72) Erfinder: Heutschi, Urs, CH-8555 Müllheim (CH)
(74) Vertreter: Frei, Alexandra Sarah

(56) Entgegenhaltungen:
- EP-A- 0 280 949
- GB-A- 2 126 188
- US-A- 3 428 516

## Beschreibung

Die Erfindung bezieht sich auf eine beliebig oft verschliess- und wieder trennbaren Verbindung eines (End-) Teils oder einer Stelle eines Wickelbandes zum Aufwickeln von Druckprodukten (eines bandförmigen Gebildes) mit einer beliebigen anderen Stelle desselben oder an einer beliebigen Stelle eines anderen jedoch gleichartigen Wickelbandes (bandförmigen Gebildes).

Wickelbänder zum Aufwickeln von Druckprodukten werden zusammen mit den Druckprodukten aufgewickelt und das Endstück am Wickelband befestigt. Verschlussbänder umwickeln einen Gegenstand und sind an ihren Enden miteinander verbunden, in der Regel allerdings derart, dass das Verschlussband zum Oeffnen zerstört werden muss. Soll ein Wickelband oder ein Verschlussband aus irgendwelchen Gründen (unverkürzt) mehrmals verwendet werden, so muss die Verbindung ohne Zerstörung getrennt werden können. Dazu dienen meist mechanische Verschliessmechanismen mit Form- (Klettenbänder, Ratschen) oder Reibschluss (Quetsch- oder Klemmvorrichtungen), die beliebig oft geöffnet und geschlossen werden können, oder mit kohäsiv wirkenden Verbindungsmitteln (Leime), die sich u.U. wieder ablöse lassen, allerdings sind bei diesen Mitteln enge Grenzen gesetzt. Die freie Wahl eines solchen Band-Verschlusses ist meist durch den Verwendungszweck eingeschränkt. Mechanische Verbindungen benötigen mehr Raum als trennbare kohäsive, dafür ist bei jenen die Verschlusskraft höher als bei diesen.

Aus der Verpackungsindustrie sind lös- und wiederverschliessbare Klebeverbindungen bekannt, die allerdings nie derartigen Belastungen ausgesetzt sind wie eine für ein Wickelband notwendige derartige Verbindung. Beispielsweise wird in der Veröffentlichung US-A-3428516 eine derartige Verbindung beschrieben. Der Klebstoff ist bei dieser Verbindung in einem neuen, noch nie verschlossenen Zustand durch eine poröse Schicht abgedeckt, sodass in diesem Zustand keine der am Verschluss beteiligten Oberflächen klebrig sind. Für das erste Verschliessen wird durch Wärme und Druck der Klebstoff durch die poröse Schicht gepresst, sodass ein Verschluss möglich wird. Dieser Vorgang ist irreversibel, sodass nach einem Öffnen des Verschlusses mindestens die eine der am Verschluss beteiligten Oberflächen dauernd klebrig ist und so in offenem Zustand des Verschlusses einer hohen Verschmutzungsgefahr ausgesetzt ist, wodurch die Lebensdauer des Verschlusses sehr beschränkt ist.

Wickel- wie auch Verschlussbänder sind auf Zug in Richtung des Bandlaufes belastet, die Verbindungsstelle des Bandendes soll sich so verhalten, wie das Band selber, das heisst, auf Zug belastbar sein. Alle anderen Belastungsformen sind untergeordnet, spielen also keine wesentliche Rolle. Ein Bandverschluss, der ausreichend auf Zug belastbar ist, erfüllt seinen Zweck, auch wenn er in anderen Richtungen kleinere Haltekräfte aufweist, im Gegenteil, die kleineren Haltekräfte in andere Richtungen als die Zugrichtung, können zum Oeffnen des Verschlusses benützt werden. Eine adhäsive Verbindung kann, wenn sie richtig aufgebaut ist, diese Forderung erfüllen. Soll eine solche Verbindung beliebig oft wiederverwendbar sein und dies auch noch an einer beliebigen Stelle des Bandes, so müssen mehrere Massnahmen sinnvoll ineinandergreifen. Eine der hervorstechendsten Massnahmen dient zur Erhaltung der Adhäsivwirkung über eine lange Gebrauchszeit.

Unter Adhäsion wird im Zusammenhang mit dieser Erfindung die Verbindungsfähigkeit zweier Oberflächen die nicht fest verleimt sind verstanden. Die beiden Oberflächen bestehen aus geeigneten Materialien, deren Paarung den gewünschten Effekt hervorruft. Vorzugsweise besteht eine der Oberflächen aus dem Verschlussband selber, die Oberfläche des Adhäsionspartners kann auf einen geeigneten Träger aufgebracht sein. Die Haltewirkung wird durch Druck und Wärmeeinwirkung erzeugt.

Die bevorzugte beliebig oft verschliess- und trennbare Verbindung besteht aus jeweils zwei Materialien (Materialpaarung), welche unter bestimmten Bedingungen zueinander eine adhäsive Wirkung ausüben, nämlich der, dass, sobald ihr unter Druck Wärme zugeführt wird, eine Adhäsion der Grenzflächen eintritt. Eines der adhäsiven Materialien ist entweder auf einem Trägermaterial angeordnet, welches die nötigen mechanischen Eigenschaften zur Manipulation, Festigkeit und Verbindungsfähigkeit mit dem Material aufweist oder es ist direkt mit dem anderen Material verbunden, in dem durch Aufrauhen des einen Materials eine Oberfäche geschaffen wird, auf welcher das andere Material (wie fest verleimt) verankert werden kann. Das Trägermaterial ist vorzugsweise bandförmig ausgestaltet und weist ähnliche Abmessungen bezüglich Verschluss- oder Wickelbandbreite und -dicke auf. Es soll auch ausreichend zugfest sein und einer oftmaligen Betätigung durch Rupfen und Zerren standhalten. Im hier diskutierten Beispiel ist es ein Gewebeband oder -gurt, auf welches eines der beiden Adhäsivmaterialien aufgebracht ist. Man könnte aber auch Werkstoffe auf der Basis von Papier verwenden. Wird kein Trägermaterial verwendet, so muss eine ebenso fest haftende Verbindung geschaffen werden wie die Verbindung zwischen Trägermaterial und Adhäsivmaterial, sie ist fest und soll nur durch Zerstörung trennbar sein, die gewünschte Trennfläche ist diejenige zwischen den beiden Adhäsivpartnern, wovon einer das Band, dasselbe Band, oder ein anderes Band von demselben Material ist, bzw. zwischen den vorgesehen lösbaren Flächen der beiden Adhäsivpartnern.

Materialpaarungen können gewählt werden aus einem ersten Polymer aus den Polymer-Gruppen Polyester, Polyamide, Polyimide, Polyterephtalate, Polycarbonate, Polyolefine und einem zweiten Polymer als Schmelzkleber auf der Basis von Polyamid-6, Polyamid-Copolymere, Polyester, Polyolefine, Polyvinylalkohol.

Ein erstes Beispiel: Das Verschlussband besteht aus Polyamid-6 und weist eine glatte Oberfläche auf (erhältlich bspw. bei Leder Beltech AG, Rapperswil). Der Verschlussteil (Endstück) besteht aus einer Nylon-Gewebebahn oder einer Gewebebahn aus Flachs (erhältlich bspw. bei Schweiz. Seidengazefabrik, 9425 Thal) die mit Schmelzklebfolie auf der Basis eines Polyamid-Copolymer beschichtet ist (erhältlich bspw. als Produkt Griltex 11 bei Ems Chemie, Domat-Ems) und diese Schicht eine mehr oder weniger glatte, nicht klebrige Oberfläche aufweist. Für eine Verbindung werden die Oberflächen des Materialpaares Polyamid-6/Polyamid-Copolymer aufeinander gepresst und solange erwärmt, bis die Erweichungstemperatur (Klebtemperatur) der Schmelzklebfolie erreicht ist und die Folie sich glatt an das Verschlussband anschmiegt. Dann lässt man die Temperatur wieder absinken. Die Kohäsionskräfte des Klebers nehmen wieder zu, bis sie die Adhäsionskräfte zwischen den beiden Materialien übertreffen. Die so erzeugte Verbindung, die keine herkömmliche Verklebung ist, haftet überraschend gut und hat in Zugrichtung einen grossen Widerstand gegen Zugkräfte, kann aber durch Anheben des Trägermaterials, also mittels einer Kraftwirkung im Winkel zur Zugkraft, leicht abgeschält werden, ohne dass Rückstände auf der Oberfläche des Verschluss- oder Wickelbandes zurückbleiben. Dadurch lässt sich solch ein Verschluss- oder Wickelband sogar von Hand öffnen. Das Wieder-Verschliessen geschieht dann wieder unter Druck und Wärmeeinwirkung, wobei auch die Folie mit dem Schmelzkleber vorgängig erwärmt und anschliessend die beiden Teile zusammengepresst werden können.

Ausgenützt wird also insbesondere die mangelhafte Klebfähigkeit eines Schmelzklebers zu einem Adhäsionspartner, aber auch die gute Klebfähigkeit desselben zum Trägermaterial, dies einerseits, und andererseits wird seine inaktive Oberfläche im nicht erwärmten Zustand ausgenützt, um ein Anhaften von Fremdpartikeln zu erschweren. Ausgenützt kann auch werden, die mangelhafte Klebfähigkeit bei glatter Oberfläche und die gute Klebfähigkeit bei rauher Oberfläche zwischen zwei Adhäsionspartnern. So bleibt die Wahl, ein Trägermaterial dann zu verwenden, wenn sich die Konsistenz keiner der beiden Adhäsionspartner als Reisszunge eignet. Die in kaltem Zustand inaktive Oberfläche wirkt einer bleibenden Verschmutzung bei offenem Verschluss entgegen, Staub- und Schmutzpartikel lassen sich vor dem Verschliessen abwischen. Ein solcher Verschluss ist über viele Verschluss- und Oeffnungszyklen verwendbar.

Ein zweites Beispiel: Das Verschlussband besteht aus Polyaethylenterephtalat und weist eine glatte Oberfläche auf (erhältlich bspw. bei Hoechst, Wiesbaden BRD). Der Verschlussteil (Endstück) besteht aus einer Misch-Gewebebahn mit Polypropylen (erhältlich bspw. bei Meister & Cie, Hasle-Rüegsau) die mit Schmelzklebfolie auf der Basis von Polyurethan beschichtet ist (erhältlich bspw. bei Guttacoll GmbH, Buxtehude BRD) und eine mehr oder weniger glatte, nicht klebrige Oberfläche aufweist. Zur Verankerung des Schmelzklebers auf dem Verschlussband, kann dieses auch an seiner Oberfläche aufgerauht werden, wodurch sich der Schmelzkleber mit dem Verschlussband auf der einen Seite fest verleimen lässt und auf der anderen Seite leicht verschliessen, öffnen, wieder verschliessen und so fort lässt. Dies, mit ein und demselben Materialpaar. Für eine Verbindung werden die Oberflächen des Materialpaares Polyaethylenterephtalat/Polyurethan aufeinander gepresst und solange erwärmt, bis die Erweichungstemperatur (Klebtemperatur) der Schmelzklebfolie erreicht ist und die Folie sich glatt an das Verschlussband anschmiegt. Dann lässt man die Temperatur wieder absinken.

Ein drittes Beispiel. Das Verschlussband besteht aus Polyamid-6 und weist eine glatte Oberfläche auf (erhältlich bspw. bei Leder Beltech, Rapperswil) Der Verschlussteil (Endstück) besteht aus einer Gewebebahn aus Polyester (erhältlich bspw. bei Schweiz. Seidengazefabrik, 9425 Thal) die mit Schmelzklebfolie auf der Basis von Polyolefin beschichtet ist (erhältlich bspw. als Produkt Polyolefin Typ P80 bei Guttacoll GmbH, Buxtehude BRD) und eine mehr oder weniger glatte, nicht klebrige Oberfläche aufweist. Für eine Verbindung werden die Oberflächen des Materialpaares Polyamid/Polyolefin aufeinander gepresst und solange erwärmt, bis die Erweichungstemperatur (Klebtemperatur) der Schmelzklebfolie erreicht ist und die Folie sich glatt an das Verschlussband anschmiegt. Dann lässt man die Temperatur wieder absinken.

Generell gesagt, eignen sich Materialpaarungen mit Partnern aus den oben angegebenen Gruppen der Polyester, Polyamide, Polyimide, Polycarbonate, Polyterephtalate, Polyolefine wegen ihrer Zähigkeit als Wickel- oder Verschlussband zusammen mit Partnern der Gruppe der Polyamide, Polyamid-Copolymere, Polyolefine, Polyester, Polyvinylalkohole, Polyurethane wegen ihrer speziellen Eigenschaften in zwei Phasenzuständen (flüssig/fest) als Schmelzkleber. Der Zugkraftwiederstand von solchen Verbindungen ist für den Zweck des nachfolgenden Anwendungsbeispiel als Wickelband absolut ausreichend, die Manipulierbarkeit hervorragend.

Die nachfolgenden Figuren zeigen das Anwendungsbeispiel an einem Wickelband zum Aufwickeln von in Schuppenformation anfallenden Druckprodukten:
- Figur 1: zeigt eine Verbindungsstelle zwischen Band und Endstück noch offen.
- Figur 2: zeigt einen Schnitt durch die offene Verbindungsstelle, in welchem die Lagen der verschiedenen Materialien Band, Trägermaterial und Verbindungsmaterial erkennbar sind.
- Figur 3: zeigt eine Verbindungsstelle während des Oeffnens.
- Figur 4: zeigt die Anwendung eines Verschlussbandes an einem Wickel mit einer stilisiert dargestellten Heiz- und Presseinrichtung beim Bandeinlauf unten am Wickel.
- Figur 5: zeigt ein Detail aus Figur 4 in Richtung Bandlauf gesehen.
- Figur 6: zeigt den Wickel mit dem zusammengefügten Verschlussband.

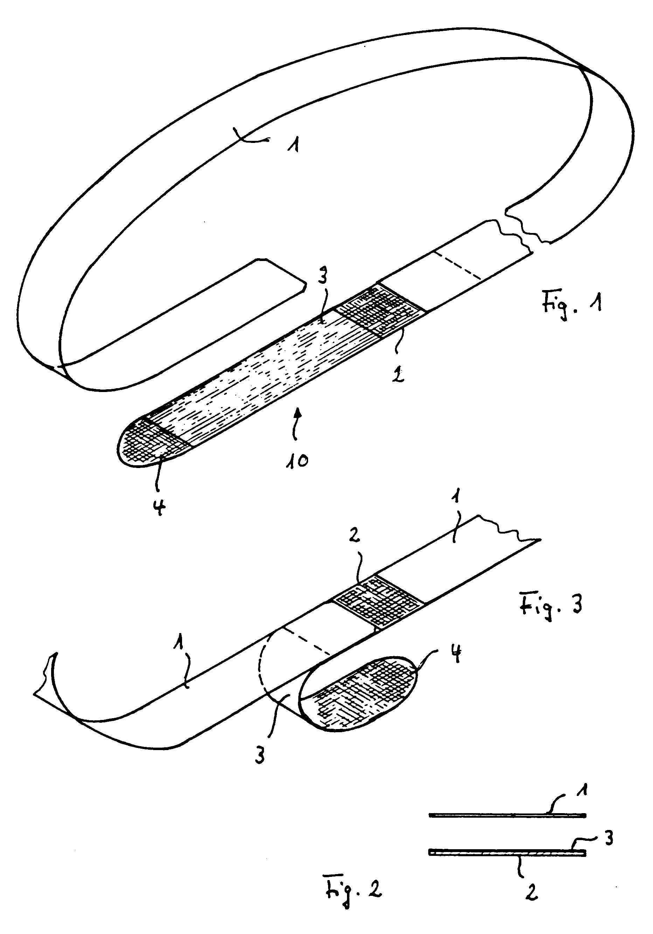

**Figur 1** zeigt sehr illustrativ ein beliebig langes Wickelband 1 an dessen einem Ende der Verschlussteil bzw. ein Endstück 10 angebracht ist und dessen anderes Ende, in der Regel ist es jedoch irgend eine Stelle des Bandes, über dem Verschlussteil positioniert ist. Der Verschlussteil ist hier ein passendes Gewebeband 2, auf welches das Verbindungsmaterial 3 über eine entsprechende Länge aufgebracht ist, im Schnitt sind diese drei Lagen in **Figur 2** dargestellt. Das Endstück ist mit einer Reisszunge 4 zum Anfassen ausgestaltet, damit, wie in **Figur 3** gezeigt, der Verschluss mit einer einfachen Reissbewegung wieder geöffnet werden kann.

Natürlich können auch zwei oder mehr Wickelbänder desselben Materials auf diese Weise miteinander verbunden werden, sei es, um ein mehrfach längeres Band zu erhalten, sei es, um es lediglich ein Stück zu verlängern. Ueberall wo das Band in Zugrichtung belastet wird, kann solch eine Verbindung gemäss Erfindung vorgesehen sein.

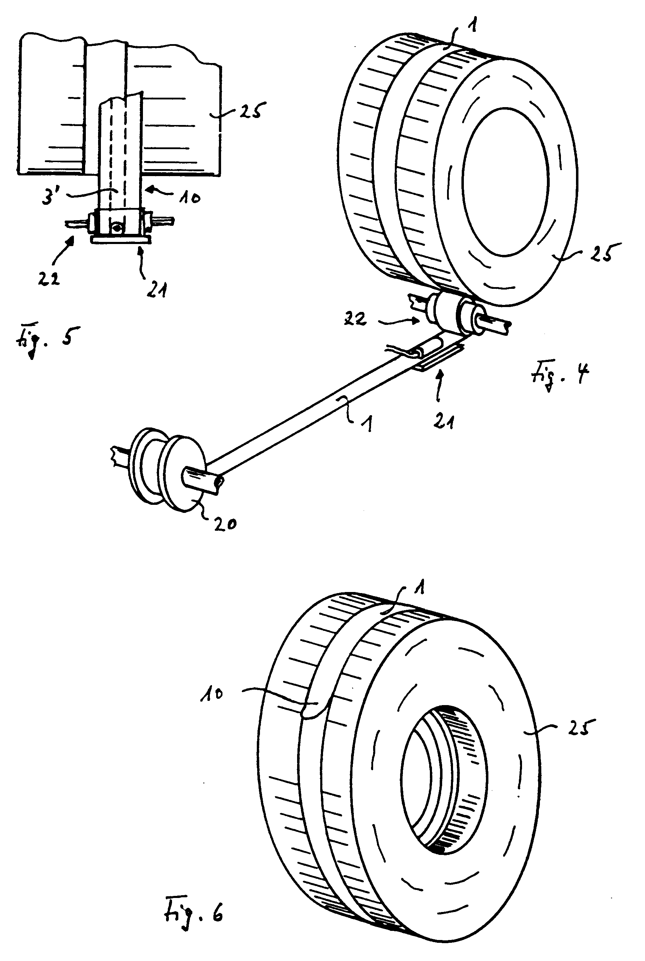

**Figur 4** zeigt die Anwendung der Erfindung an einem Wickel 25, in welchem ein Wickel- oder Halteband 1 (es ist das Verschlussband) mitaufgerollt wird und welches Wickelband schliesslich fixiert werden soll. Das Wickelband wird ab einer Bandspule 20 abgerollt. Am Ende des Bandes befindet sich der Verschlussteil, also das Endstück 10, das mit dem Vorratsteil des Bandes noch eingerollt ist. Das Band läuft durch eine Heizstelle 21, umschlingt eine Anpressrolle 22 und gelangt auf den Wickel 25, dessen Materialeingang hier nicht gezeigt ist. Läuft die Vorratsrolle leer, so erscheint das Endstück 10 mit der Schliessschicht 3 nach unten. Es wird in der Heizeinrichtung (ohne Pressung) über die Erweichungstemperatur (Klebtemperatur) erwärmt und beim Weiterlaufen durch die Anpressrolle an die äusserste Bandlage auf dem Wickel gepresst. Falls das Band verlängert werden sollte, kann man es an dieser Stelle mit einem weiteren Band vom selben Material zusammenbringen.

**Figur 5** zeigt ein bevorzugtes Vorgehen, nämlich, dass die Beheizung der Haftstelle 3 auf einer schmäleren Bahn 3' als die volle Breite vorgesehen ist, sodass bei einem Versatz des Verschlussbandes 1 mit dem Verschlussteil 10 keine Klebwirkung ausserhalb des Bandes stattfinden kann. **Figur 6** zeigt schliesslich einen gemäss Erfindung verschlossenen Wickel, bei dem die Reisszunge speziell hervorgehoben ist. Sie dient hier zum automatischen Aufreissen der Verschlussstelle bspw. mittels magnetischer Kraft. Dazu wird in den Träger Ferromagnetika eingebracht, welche die Reisszunge von einem Magneten erfassen lässt, um den Verschluss aufzuschälen. Nach dem Oeffnen wird das Band wieder auf die Vorratsrolle gespult während gleichzeitig der Wickel abgetragen wird. Dieser Vorgang ist sehr viele Male wiederholbar.

Das hier diskutierte Anwendungsbeispiel betrifft einen Wickel mit aufgewickelten Druckprodukten. Ein solcher Wickel hat ein bis zwei Meter Durchmesser und das verwendete Wickelband (Verschlussband) ist ungefähr 5 cm breit. Die Verschlusslänge liegt zwischen 10 bis 50 cm und hat damit eine Adhäsionsfläche so um die 20 cm². Es handelt sich also um eine typisch industrielle Anwendung, die auch auf andere Weise durchgeführt werden kann.

Beispielsweise wurde das Verschliessen des Wickelbandes eines Druckproduktewickels mit dem neuartigen Klettenreissverschluss durchgeführt (EP-A-310 784). In dieser Patentschrift sind die Probleme, die sich durch das Verschliessen solcher Wickel stellen, dargestellt. Die hier vorgestellte Erfindung ist billiger als der Klettenverschluss, kann maschinell besser manipuliert werden (z.B. transportieren) und übertrifft in Langlebigkeit einen Klettenverschluss, der mit der Zeit an Spannkraft verliert und zunehmend beschädigt wird. Jedoch braucht der Klettenverschluss keine spezielle Vorrichtung zum Verschliessen. Durch das Stützband ist das Endstück beim Klettenband aber etwas dicker, während der Verschluss gemäss Erfindung im wesentlichen eine konstante Dicke auch über die Verschlusslänge aufweist, wodurch ein besserer Bandtransport ermöglicht wird. Ausserdem ist der Verschluss gemäss Erfindung nach jeder Anwendung sozusagen wieder wie neu.

## Patentansprüche

1. Wickelband zum Aufwickeln und Festhalten von auf einem Wickelkern aufgerollten Druckprodukten, welches Wickelband Verschlussmittel aufweist, **dadurch gekennzeichnet**, dass zur Verbindung eines Endbereichs des Wickelbandes mit jedem anderen Bereich desselben Bandes oder mit einem Bereich eines anderen Wickelbandes derselben Art das Wickelband im wesentlichen aus einem ersten Polymer besteht und einen Endbereich aufweist, der mindestens teilweise aus einem zweiten Polymer besteht, dass das erste Polymer einen höheren Erweichungspunkt hat als das zweite Polymer und dass zwischen einer Oberfläche des ersten Polymers und einer Oberfläche des zweiten Polymers unter Wärme- und Druckeinfluss eine durch Abschälen lösbare Oberflächenverbindung herstellbar ist, die einen beliebig oft lös- und wiederverschliessbaren Verschluss bildet, wobei für jeden Gebrauch dasselbe Verfahren mit Wärme und Druckeinfluss zur Herstellung der Haftverbindung verwendet wird und dabei in kaltem Zustand der offene Verschluss eine inaktive, nicht klebrige Oberfläche aufweist.

2. Wickelband nach Anspruch 1, **dadurch gekennzeichnet**, dass das erste Polymer aus einer der Gruppen Polyester, Polyamide, Polyimide, Polyterephtalate, Polycarbonate, Polyolefine entstammt und das zweite Polymer ein Schmelzkleber auf der Basis von Polyamid-6, Polyamid-Copolymere, Polyester, Polyolefine, Polyvinylalkohol ist.

3. Wickelband nach Anspruch 1 oder 2, **dadurch gekennzeichnet**, dass der Endbereich aus einem Träger besteht, der am Band aus dem ersten Polymer befestigt ist und auf dem das zweite Polymer aufgebracht ist.

4. Wickelband nach Anspruch 3, **dadurch gekennzeichnet**, dass der Endbereich aus einem Träger aus Gewebe besteht, auf welchem als zweites Polymer ein Schmelzkleber aufgetragen ist.

5. Wickelband nach einem der Ansprüche 3 bis 5, **dadurch gekennzeichnet**, dass der Endbereich aus Träger und darauf aufgebrachtem zweitem Polymer im wesentlichen gleich breit und gleich dick ist wie die übrigen Bereiche des Bandes.

6. Wickelband nach Anspruch 1 oder 2, **dadurch gekennzeichnet**, dass der Endbereich wie die übrigen Bereiche des Bandes im wesentlichen aus dem ersten Polymer besteht und auf der einen Seite mit dem zweiten Polymer beschichtet ist und dass der aus dem ersten Polymer bestehende Endbereich auf der mit dem zweiten Polymer beschichteten Seite aufgerauht ist.

7. Wickelband nach einem der Ansprüche 1 bis 6, **dadurch gekennzeichnet**, dass der Endbereich zusätzlich ein Ferromagnetikum aufweist.

8. Verfahren zum maschinellen Verschliessen und Lösen eines Wickelbandes nach einem der Ansprüche 1 bis 7, **dadurch gekennzeichnet**, dass zum Verschliessen und zum Wiederverschliessen der Endbereich des Bandes erwärmt und auf das am Umfang des Wickels liegende Band gepresst wird und dass zum Öffnen der kalte Endbereich vom darunterliegenden Band abgeschält wird durch Aufziehen des Endbereiches in einem Winkel zur Ausrichtung des Bandes, wobei der geöffnete Verschluss eine inaktive, nicht klebrige Oberfläche hat.

9. Verfahren nach Anspruch 8, **dadurch gekennzeichnet**, dass bei der Erwärmung des Endbereiches eine Fläche erwärmt wird, die im wesentlichen zur Mittenlinie des Bandes symmetrisch ist aber schmaler als die Breite des Bandes.

10. Verfahren nach Anspruch 12, **dadurch gekennzeichnet**, dass das Aufziehen mittels magnetischer Kraft, die am Ferromagnetika enthaltenden Endbereich angreift, durchgeführt wird.

## Claims

1. Winding belt for winding and retaining printed products rolled onto a winding core, said winding belt having closure means, characterized in that for joining an end region of the winding belt to any other area of the same belt or with an area of another winding belt of the same type, the winding belt essentially comprises a first polymer and has an end region which is at least partly made from a second polymer, that the first polymer has a higher softening point than the second polymer and that between a surface of the first polymer and a surface of the second polymer, under heat and pressure influence, a surface junction detachable by peeling off can be produced, which forms a closure which can be opened and reclosed a random number of times and for each use the same process with heat and pressure influence is used for producing the adhesive joint and in the cold state the open closure has an inactive, non-sticky surface.

2. Winding belt according to claim 1, characterized in that the first polymer is obtained from one of the groups polyesters, polyamides, polyimides, polyterephthalates, polycarbonates and polyolefins and the second polymer is a hot-melt adhesive based on polyamide-6, polyamide copolymers, polyesters, polyolefins or polyvinyl alcohol.

3. Winding belt according to claim 1 or 2, characterized in that the end region comprises a carrier, which is fixed to the belt made from the first polymer and to which is applied the second polymer.

4. Winding belt according to claim 3, characterized in that the end region comprises a fabric carrier on which a hot-melt adhesive is applied as the second polymer.

5. Winding belt according to one of the claims 3 to 5, characterized in that the end region formed by the carrier and the second polymer applied thereto has substantially the same width and thickness as the remaining regions of the belt.

6. Winding belt according to claim 1 or 2, characterized in that the end region, like the remaining regions of the belt, essentially comprises the first polymer and is coated on one side with the second polymer and that the end region comprising the first polymer is roughened on the side coated with the second polymer.

7. Winding belt according to one of the claims 1 to 6, characterized in that the end region also has a ferromagnetic.

8. Method for the mechanical closing and opening of a winding belt according to one of the claims 1 to 7, characterized in that for closing and reclosing the end region of the belt is heated and pressed onto the belt located on the circumference of the reel and that for opening the cold end region is peeled off the underlying belt by pulling the end region up at an angle to the orientation of the belt, the opened closure having an inactive, non-sticky surface.

9. Method according to claim 8, characterized in that on heating the end region a surface is heated, which is substantially symmetrical to the centre line of the belt, but is narrower than the belt width.

10. Method according to claim 12, characterized in that drawing on takes place by magnetic force acting on the end region which contains ferromagnetics.

## Revendications

1. Bande d'enroulement pour l'enroulement et le maintien de produits imprimés roulés sur un noyau d'enroulement, laquelle présente des moyens de fermeture, caractérisée en ce que, pour la liaison d'un secteur d'extrémité de la bande d'enroulement avec tout autre secteur de ladite bande ou avec un secteur d'une autre bande d'enroulement du même type, la bande d'enroulement se compose pour l'essentiel d'un premier polymère et présente un secteur d'extrémité qui se compose au moins partiellement d'un deuxième polymère, en ce que le premier polymère a un point de ramollissement plus élevé que le deuxième polymère et en ce qu'il est possible de créer entre une surface du premier polymère et une surface du deuxième polymère, sous l'influence de la pression et de la chaleur, une liaison de surface amovible par pelage, qui forme une fermeture détachable et refermable aussi souvent qu'on le souhaite, le même procédé comportant l'action de la chaleur et de la pression étant utilisé pour chaque utilisation pour créer la liaison par adhérence, et la fermeture ouverte présentant à froid une surface inactive qui n'est pas collante.

2. Bande d'enroulement selon la revendication 1, caractérisée en ce que le premier polymère provient de l'un des groupes : polyesters, polyamides, polyimides, polytéréphtalates, polycarbonates, polyoléfines et le deuxième polymère est une colle à fusion à base de polyamide-6, de copolymères de polyamide, de polyesters, de polyoléfines, d'alcool polyvinylique.

3. Bande d'enroulement selon la revendication 1 ou 2, caractérisée en ce que le secteur d'extrémité se compose d'un premier support, qui est fixé sur la bande faite du premier polymère et sur lequel le deuxième polymère est appliqué.

4. Bande d'enroulement selon la revendication 3, caractérisée en ce que le secteur d'extrémité se compose d'un support en textile, sur lequel est appliquée une colle à fusion servant de deuxième polymère.

5. Bande d'enroulement selon l'une ou l'ensemble des revendications 3 à 5, caractérisée en ce que le secteur d'extrémité formé du support et du deuxième polymère appliqué sur celui-ci est sensiblement de même largeur et de même épaisseur que les autres secteurs de la bande.

6. Bande d'enroulement selon la revendication 1 ou 2, caractérisée en ce que le secteur d'extrémité se compose sensiblement, comme les autres secteurs de la bande, du premier polymère et est revêtu sur un côté du deuxième polymère et en ce que le secteur d'extrémité composé du premier polymère est rendu rugueux sur le côté recouvert du deuxième polymère.

7. Bande d'enroulement selon l'une ou l'ensemble des revendications 1 à 6, caractérisée en ce que le secteur d'extrémité présente en outre un matériau ferromagnétique.

8. Procédé pour la fermeture et l'ouverture mécaniques d'une bande d'enroulement selon l'une ou l'ensemble des revendications 1 à 7, caractérisé en ce que pour fermer et refermer la bande, son secteur d'extrémité est chauffé et appuyé sur la bande reposant sur la circonférence du rouleau et en ce que pour l'ouverture, le secteur d'extrémité froid de la bande située en-dessous est pelé en tirant sur le secteur d'extrémité en formant un angle par rapport à l'orientation de la bande, la fermeture ouverte ayant alors une surface inactive et qui ne colle pas.

9. Procédé selon la revendication 8, caractérisé en ce que lors du chauffage du secteur d'extrémité, la surface qui est chauffée est sensiblement symétrique par rapport à la ligne médiane de la bande mais plus étroite que la largeur de la bande.

10. Procédé selon la revendication 12, caractérisé en ce que l'ouverture est réalisée au moyen d'une force magnétique qui s'exerce sur le secteur d'extrémité contenant des matériaux ferromagnétiques.
